# EUROPEAN PATENT APPLICATION

(11) **EP 3 536 149 A1**
(43) Date of publication of application: **11.09.2019**
(21) Application number: 17867682.1
(22) Date of filing: 07.11.2017
(51) Int. Cl.: A01N 25/02, A01N 57/28, A01N 25/06, C05G 3/06

(54) **LIQUID SPRAY AGENT FOR PLANTS**

(30) Priority: 07.11.2016 JP 2016217075
(71) Applicant: Mitsubishi Chemical Corporation, Tokyo 100-8251 (JP)
(72) Inventor: IKUBO Satoshi, Osaka-shi Osaka 530-0018 (JP); FURO Chizuko, Osaka-shi Osaka 530-0018 (JP); MANDAI Shusaku, Osaka-shi Osaka 530-0018 (JP)
(74) Representative: Kuhnen & Wacker Patent- und Rechtsanwaltsbüro PartG mbB
(86) International application number: PCT/JP2017/040120
(87) International publication number: WO 2018/084313

(57) **Abstract**

A liquid spray agent for plants includes: a polyvinyl alcohol resin (A) having a saponification degree of from 30 mol% to 60 mol%; and an anionic surfactant (B). The liquid spray agent for plants has enhanced spreading property and stability as a spray agent.

## Description

### TECHNICAL FIELD

The present disclosure relates to a liquid spray agent for plants that is excellent in spreading property of an active component in an agricultural chemical, a fertilizer, or the like, and in stability as a liquid spray agent for plants containing such active component.

### BACKGROUND ART

In general, in agricultural and horticultural fields, a fertilizer for growth promotion of fruits, vegetables, and the like or an agricultural chemical for extermination of pests is diluted with water and sprayed with no additives. However, when the fertilizer or the agricultural chemical is diluted with water and sprayed onto plants with no additives, an active component of the fertilizer or the agricultural chemical runs off owing to rainfall or the like or is released or detached owing to wind, which may often impair sustentation of effects.

Accordingly, in order to improve an adhesion property or spreading property of the active component of the fertilizer or the agricultural chemical to a plant, a spreading agent is usually added to a solution obtained by diluting the fertilizer or the agricultural chemical with water. As the spreading agent, for example, there is generally used a polyoxyethylene alkyl phenyl ether, a polyoxyethylene alkyl ether, a polyoxyethylene fatty acid ester, a ligninsulfonic acid salt, or a naphthylmethanesulfonic acid salt, which has a property of reducing the surface tension of a spray liquid to improve an adhesion ability or spreadability to a hardly wetted insect or crop plant and to enhance an effect of the fertilizer or the agricultural chemical. However, the agents have very high affinity to water, and hence the runoff of the agents due to rainfall cannot be suppressed.

Some of spreading agents exhibiting spreading effects contain a polyoxyethylene resin acid ester, paraffin, or the like as a major component, but have problems in that the effects of the agents cannot be exhibited when the agents are used at low concentrations, and in that films formed by drying the agents are not dissolved in water and hence remain forever on plants. The spreading agents further have problems in that the agents are poorly soluble in the above-mentioned solutions diluted with water and act only when blended in large amounts.

In recent years, a spreadable composition of an agrochemical active component containing a polyvinyl alcohol has been developed to solve the above-mentioned problems (see Patent Document 1).

The improvement of such polyvinyl alcohol described in Patent Document 1 has been required because the polyvinyl alcohol has a saponification degree of about 88 mol%, and hence runs off owing to rainwater or the like. In view of the foregoing, a liquid spray agent for agricultural use containing a polyvinyl alcohol resin having a saponification degree of from 30 mol% to 60 mol% has been proposed (see Patent Document 2).

The liquid spray agent for agricultural use described in Patent Document 2 has been satisfactory in terms of a spreading property. However, the polyvinyl alcohol resin used in the liquid spray agent for agricultural use described in Patent Document 2 has low dispersion stability in water, and hence involves an inconvenience in that when the liquid spray agent for agricultural use is left to stand for a long time period, the polyvinyl alcohol resin is precipitated. Accordingly, the inventors have investigated a further improvement.

### RELATED ART DOCUMENTS

### PATENT DOCUMENTS

PTL 1: JP-A-HEI8(1996)-217604
PTL 2: JP-A-2015-134704

### SUMMARY

The present disclosure has been made in view of the above-mentioned circumstances, and provides a liquid spray agent for plants to be used for plants in agriculture or horticulture, the liquid spray agent having the following features: the liquid spray agent has a high spreading property on a leaf surface or the like; and even when such liquid spray agent is left to stand for a long time period, no precipitate is produced, that is, the liquid spray agent is excellent in stability.

To provide such liquid spray agent, the inventors have found that particularly when an anionic surfactant out of surfactants is incorporated into a liquid spray agent for plants in addition to a polyvinyl alcohol resin (hereinafter abbreviated as "PVAresin"), an excellent spreading property is obtained and the liquid spray agent has high stability.

That is, the present disclosure relates to a liquid spray agent for plants, including: a polyvinyl alcohol resin (A) having a saponification degree of from 30 mol% to 60 mol%; and an anionic surfactant (B).

The liquid spray agent for plants of the present disclosure is excellent in sprayability as well as spreading property because of the effect of the specific PVA resin (A). Further, the liquid spray agent for plants of the present disclosure uses the anionic surfactant (B) in combination with the specific PVA resin (A), and is hence dispersed in water without being deposited or precipitated. In addition, the runoff of the liquid spray agent due to rainfall is suppressed by the effect of a hydrophobic acetyl group that the specific PVA resin (A) has, and hence the spreading property and stability of the liquid spray agent are excellent.

Accordingly, the liquid spray agent for plants of the present disclosure is particularly preferably used as a spray agent for foliar application.

In addition, when the PVA resin (A) has an average degree of polymerization of from 100 to 2,000, the spreading property of the liquid spray agent for plants and the solubility of the PVA resin in the liquid spray agent for plants become more excellent.

In addition, when the PVA resin (A) includes a PVA resin having a hydrophilic modifying group, the spreading property of the liquid spray agent for plants and the solubility of the PVA resin in the liquid spray agent for plants become more excellent.

Further, when the content of the anionic surfactant (B) is from 1 part by weight to 20 parts by weight with respect to 100 parts by weight of the PVA resin (A), the spreading property of the liquid spray agent for plants and the solubility of the PVA resin in the liquid spray agent for plants become more excellent.

### DESCRIPTION OF EMBODIMENTS

The following descriptions on constituent features are examples (typical examples) of embodiments of the present disclosure, and the present disclosure is not limited to the descriptions.

The present disclosure is described below in detail.

A liquid spray agent for plants of the present disclosure has a feature of including: a PVA resin (A) having a saponification degree of from 30 mol% to 60 mol%; and an anionic surfactant (B) .

### [PVA Resin (A)]

First, the PVA resin (A) is described.

In the present disclosure, the term "PVA resin" is meant to include not only a polyvinyl alcohol formed only of a vinyl alcohol unit and a vinyl ester unit (unmodified PVA resin) but also a polyvinyl alcohol including a vinyl alcohol unit, a vinyl ester unit, and another copolymerizable component (modified PVA resin). In addition, the saponification degree of the PVA resin (A) to be used in the present disclosure is from 30 mol% to 60 mol%, preferably from 32 mol% to 55 mol%, particularly preferably from 35 mol% to 50 mol%. The saponification degree refers to a value [n/ (n+m) ×100] calculated from the number of vinyl alcohol units n in a molecule of the PVA resin and the number of vinyl ester units m therein.

When such saponification degree is too low, the agent tends to be insoluble in water and hence unable to act as a liquid spray agent. Meanwhile, when the saponification degree is too high, the agent tends to have a lowered spreading property.

The saponification degree is a value obtained by an analysis based on alkali consumption required for the hydrolysis of residual vinyl acetate in conformity with JIS K 6726.

In addition, the average degree of polymerization of the PVA resin (A) is preferably from 100 to 2,000, particularly preferably from 150 to 1,000, more particularly preferably from 200 to 800. When such average degree of polymerization is too low, the agent tends to have a lowered spreading property, while when the average degree of polymerization is too high, the agent tends to have lowered solubility.

The average degree of polymerization is measured in conformity with JIS K 6726.

The PVA resin (A) may be usually obtained by saponifying a vinyl ester polymer obtained by polymerizing a vinyl ester monomer .

As the vinyl ester monomer, for example, vinyl formate, vinyl acetate, vinyl trifluoroacetate, vinyl propionate, vinyl butyrate, vinyl caprate, vinyl laurate, a vinyl versatate, vinyl palmitate, vinyl stearate, or vinyl pivalate is used alone, or two or more kinds thereof are used in combination. In practical use, vinyl acetate is preferably used from the viewpoint of economic efficiency.

In addition, the PVA resin (A) may be an unmodified one or a modified one. In particular, however, the modified PVA resin improves the dispersion stability of the agent in water, and hence the modified PVA resin is preferred, and a PVA resin having a hydrophilic modifying group is more preferred. Such modified PVA resin may be produced by saponifying a polymer of a vinyl ester monomer and another unsaturated monomer, or by post-modifying a PVA resin.

Examples of the other unsaturated monomer include: monomers each having a vinyl group and an epoxy group, such as glycidyl (meth)acrylate, glycidyl (meth)allyl ether, 3,4-epoxycyclohexyl (meth)acrylate, and allyl glycidyl ether; monomers each having two or more allyl groups, such as triallyloxyethylene, diallyl maleate, triallyl cyanurate, triallyl isocyanurate, tetraallyloxyethane, and diallyl phthalate; allyl ester monomers, such as allyl acetate, vinyl acetoacetate, allyl acetoacetate, and allyl diacetoacetate; acetoacetoxyalkyl (meth)acrylates, such as acetoacetoxyethyl (meth)acrylate and acetoacetoxypropyl (meth)acrylate; acetoacetoxyalkyl crotonates, such as acetoacetoxyethyl crotonate and acetoacetoxypropyl crotonate; 2-cyanoacetoacetoxyethyl (meth)acrylate; divinylbenzene; alkylene glycol (meth)acrylates, such as ethylene glycol di(meth)acrylate, 1,2-propylene glycol di(meth)acrylate, 1,3-propylene glycol di(meth)acrylate, 1,4-butanediol di(meth)acrylate,1,6-hexanediol di(meth)acrylate, and neopentyl glycol di(meth)acrylate; trimethylolpropane tri(meth)acrylate; allyl (meth)acrylate; hydroxyalkyl (meth)acrylates (each having a C1 to C10 alkyl group, preferably a C1 to C6 alkyl group in its alkyl moiety), such as 2-hydroxyethyl (meth)acrylate, hydroxypropyl (meth)acrylate, and 4-hydroxybutyl (meth)acrylate; nitrile monomers, such as (meth)acrylonitrile; styrene monomers, such as styrene and α-methylstyrene; olefins, such as ethylene, propylene, 1-butene, and isobutene; halogenated olefins, such as vinyl chloride, vinylidene chloride, vinyl fluoride, and vinylidene fluoride; olefin monomers, such as ethylenesulfonic acid; diene monomers, such as butadiene-1,3, 2-methylbutadiene, 1,3- or 2,3-dimethylbutadiene-1,3, and 2-chlorobutadiene-1,3; hydroxy group-containing α-olefins, such as 3-buten-1-ol, 4-penten-1-ol, 5-hexene-1,2-diol, and glycerin monoallyl ether, and derivatives such as acylated products thereof; hydroxymethylvinylidene diacetates, such as 1,3-diacetoxy-2-methylenepropane, 1,3-dipropionyloxy-2-methylenepropane, and 1,3-dibutyronyloxy-2-methylenepropane; unsaturated acids, such as itaconic acid, maleic acid, and acrylic acid, and salts or monoalkyl or dialkyl esters thereof; nitriles, such as acrylonitrile; amides, such as methacrylamide and diacetone acrylamide; olefin sulfonic acids, such as ethylenesulfonic acid, allylsulfonic acid, methallylsulfonic acid, and 2-acrylamido-2-methylpropanesulfonic acid (AMPS), or compounds such as salts thereof; vinylalkyldialkoxysilanes, such as vinyltriethoxysilane, vinyltrimethoxysilane, vinyltripropoxysilane, vinyltributoxysilane, vinylmethyldimethoxysilane, and vinylmethyldiethoxysilane; γ-(meth)acryloxypropyltrialkoxysilanes, such as γ-(meth)acryloxypropyltrimethoxysilane and γ-(meth)acryloxypropyltriethoxysilane; γ-(meth)acryloxypropylalkyldialkoxysilanes, such as γ-(meth)acryloxypropylmethyldimethoxysilane and γ-(meth)acryloxypropylmethyldiethoxysilane; vinyltris(β-methoxyethoxy)silane; and hydroxymethylvinylidene diacetate.

In addition, as the other unsaturated monomer, there may also be used compounds each having a diol, such as 3,4-dihydroxy-1-butene, 3,4-diacyloxy-1-butene, 3-acyloxy-4-hydroxy-1-butene, 4-acyloxy-3-hydroxy-1-butene, 3,4-diacyloxy-2-methyl-1-butene, 4,5-dihydroxy-1-pentene, 4,5-diacyloxy-1-pentene, 4,5-dihydroxy-3-methyl-1-pentene, 4,5-diacyloxy-3-methyl-1-pentene, 5,6-dihydroxy-1-hexene, 5,6-diacyloxy-1-hexene, glycerin monoallyl ether, 2,3-diacetoxy-1-allyloxypropane, 2-acetoxy-1-allyloxy-3-hydroxypropane, 3-acetoxy-1-allyloxy-2-hydroxypropane, glycerin monovinyl ether, glycerin monoisopropenyl ether, vinyl ethylene carbonate, and 2,2-dimethyl-4-vinyl-1,3-dioxolane.

In addition, in the production of the modified PVA resin, those unsaturated monomers may be used alone or in combination thereof.

Inaddition, as a method for the post-modification, there is given, for example, a method involving acetoacetic acid esterification, acetalization, urethanization, etherification, grafting, phosphoric acid esterification, or oxyalkylenation of the PVA resin.

In addition, out of the modified PVA resins, a PVA resin having a hydrophilic modifying group is preferred because of its high affinity to water. Examples of the hydrophilic modifying group include: anionic hydrophilic modifying groups, such as a carboxyl group, a sulfonic acid group, a sulfonic acid salt group, a phosphoric acid group, a phosphoric acid salt group, an amino group, an amino group-containing alkyl group, a thiol group, and a thiol group-containing alkyl group; and nonionic hydrophilic modifying groups, such as an oxyalkylene group, a diacetone acrylamide group, a mercapto group, a silanol group, and a hydroxyl group-containing alkyl group.

Of those, a PVA resin having a hydrophilic modifying group, such as an oxyalkylene group-containing PVA resin, a carboxyl group-containing PVA resin, or a hydroxyl group-containing alkyl group-modified PVA resin, is preferred in terms of solubility in water, and the oxyalkylene group-containing PVA resin is particularly preferred. In addition, a PVA resin containing two or more kinds of those modifying groups, in particular, for example, a PVA resin containing the following two kinds may be used: an oxyalkylene group and a carboxyl group.

The carboxyl group-containing PVA resin is produced by copolymerizing a vinyl ester monomer and a carboxyl group-containing unsaturated monomer, and saponifying the copolymer. Examples of the carboxyl group-containing unsaturated monomer include: carboxyl group-containing unsaturated compounds, such as acrylic acid, methacrylic acid, crotonic acid, maleic acid, maleic anhydride, fumaric acid, and itaconic acid; products obtained by wholly or partially neutralizing carboxyl groups of those compounds with a base, such as an alkali compound (e.g., sodium hydroxide or potassium hydroxide); monoalkyl esters of the carboxyl group-containing unsaturated compounds, such as methyl acrylate, ethyl acrylate, methyl methacrylate, monomethyl fumarate, and monomethyl maleate; and dialkyl esters of the carboxyl group-containing unsaturated compounds, such as diethyl fumarate and diethyl maleate. The number of carbon atoms of each of those esters is usually from 1 to 20, more preferably from 1 to 10, particularly preferably from 1 to 4 in terms of economic efficiency and practicality. Of those, a maleic acid compound is preferred, and monomethyl maleate is more preferred.

In addition, the structure of the oxyalkylene group-containing PVA resin and a production method therefor are as described in paragraphs [0013] to [0025] of JP-A-2015-117286.

Examples of the hydroxyl group-containing alkyl group-modified PVA resin include many resins in accordance with, for example, the number of carbon atoms of the alkyl group, the number of hydroxyl groups of the alkyl group, and the valence and bonding manner of each of the hydroxyl groups, but the number of carbon atoms of the alkyl group is usually from 1 to 5, particularly preferably 2 or 3. In addition, the number of the hydroxyl groups is usually from 1 to 4, particularly preferably from 1 to 3. Of those hydroxyl group-containing alkyl groups, an alkyl group having a primary hydroxyl group is preferred, and a 1, 2-diol group in which a primary hydroxyl group and a secondary hydroxyl group are bonded to carbon atoms adjacent to each other is particularly preferred.

An oxyethylene group is included in hydroxyl group-containing functional groups because an end of the oxyethylene group is usually a hydroxyl group.

An agent in which the modification ratio of the modified PVA resin is usually from 0.1 mol% to 10 mol%, preferably from 0.5 mol% to 5 mol%, particularly preferably from 1 mol% to 2 mol% is used as the liquid spray agent for plants of the present disclosure. When such modification ratio is too small, the liquid spray agent tends to have lowered stability, and when the modification ratio is too large, the agent tends to have a lowered spreading property.

### [Anionic Surfactant (B)]

Next, the anionic surfactant (B) is described.

In the present disclosure, a surfactant is incorporated into the liquid spray agent for plants, and it is important that the anionic surfactant (B) be incorporated as the surfactant.

Examples of the anionic surfactant (B) include a carboxylic acid salt, a sulfonic acid salt, a sulfuric acid ester salt, and a phosphoric acid ester salt. Examples of the carboxylic acid salt include sodium laurate and sodium stearate. Examples of the sulfonic acid salt include sodium dodecylbenzenesulfonate and sodium di-2-ethylhexyl sulfosuccinate. An example of the sulfuric acid ester salt is sodium polyoxyethylene lauryl ether sulfate. An example of the phosphoric acid ester salt is sodium lauryl phosphate. Those anionic surfactants (B) may be used alone or in combination thereof.

Of the anionic surfactants (B), the sulfonic acid salt, the sulfuric acid ester salt, or the like is preferably used in terms of solubility in water. Of those, the sulfonic acid salt is particularly preferred.

The content of such anionic surfactant (B) is preferably from 1 part by weight to 20 parts by weight, particularly preferably from 2 parts by weight to 15 parts by weight, more particularly preferably from 3 parts by weight to 10 parts by weight with respect to 100 parts by weight of the PVA resin (A). When such content is too large, the liquid spray agent tends to have a lowered spreading property, and when the content is too small, the liquid spray agent tends to have lowered stability.

In addition, as chemicals to be used for the liquid spray agent for plants of the present disclosure, there are used chemicals each serving as a basis of an active component of the spray agent, that is, chemicals each required to have a spreading property to a plant, such as: agricultural chemicals, such as an insecticide, a fungicide, an insecticide-fungicide, a herbicide, a rodenticide, a plant growth regulator, an attractant, a spreading agent, a microbial pesticide, a repellent, and an agrochemical fertilizer; fertilizers; and insect repellents. Any such chemical may be used as long as the chemical is dissolved or dispersed in water or an alcohol, but a chemical that is not reactive with the PVA resin (A) to be used in the liquid spray agent for plants of the present disclosure needs to be used.

In addition to the PVA resin (A), the anionic surfactant (B), a solvent, and the chemical, another component, such as an emulsifier, a wettable powder, a flowable, a surfactant (except the anionic surfactant (B)), a thickener, or a preservative, is blended in the liquid spray agent for plants of the present disclosure as required; provided that the amount of such other component blended is preferably 10 wt.% or less with respect to the whole of the liquid spray agent for plants.

In this case, the liquid spray agent for plants of the present disclosure may be prepared by, for example, (1) a method involving mixing a solution of the PVA resin (A) with a solution of the chemical, (2) a method involving adding a powdery chemical to a solution of the PVA resin (A) and mixing the contents, or (3) a method involving adding powder of the PVA resin (A) to a solution of the chemical and mixing the contents. The agent is preferably prepared by the method described in the item (1) out of the methods in terms of the dispersibility of the chemical and the ease of preparation.

The concentration of the specific PVA resin (A) in the liquid spray agent for plants of the present disclosure thus obtained is usually from 0.01 wt.% to 30 wt.%, preferably from 0.1 wt.% to 20 wt.%, more preferably from 1 wt.% to 10 wt.%. That is, this is because, when the agent is prepared so as to include the resin at such concentration, the agent becomes excellent in spreading property, sprayability, and the like.

In addition, the concentration of the chemical from which the active component is derived in the liquid spray agent for plants of the present disclosure is usually from 0.1 ppm by weight to 5,000 ppm by weight, preferably from 1 ppm by weight to 1,000 ppm by weight, more preferably from 10 ppm by weight to 500 ppm by weight. When the concentration of such chemical is too low, the effects of the chemical are hardly obtained, and when the concentration is too high, the agent may adversely affect plants. Therefore, when the agent is prepared so as to include the chemical at such concentration, the active component in the chemical can act effectively.

In addition, the liquid spray agent for plants of the present disclosure may be used as, for example, a spray agent for leaf surfaces, stems, and fruits, or a spray agent for water culture. The agent is particularly preferably used as a spray agent for foliar application. The spraying of the liquid spray agent for plants of the present disclosure may be appropriately performed by a known method. The method is preferably, for example, a spray method, that is, a method involving atomizing the liquid spray agent for plants to spray the agent in a mist manner. According to such method, the fluidity of the liquid spray agent for plants of the present disclosure is improved by a spray pressure applied by the method, and hence the agent can be easily sprayed. In addition, after the adhesion of the agent to a plant by the spraying, a spreading property tends to be expressed on the plant by the thixotropy of the liquid spray agent for plants of the present disclosure.

In addition, specific examples of a method of spraying the liquid spray agent for plants of the present disclosure by the spray method include: a method involving manually spraying the agent with a spray, an atomizer, a spreader, or the like; and a method involving aerially spraying the agent with an airplane, a helicopter, a drone, or the like (aerial spraying method). Those methods can be appropriately selected in accordance with the kind of the liquid spray agent for plants of the present disclosure and the purpose of its spraying. A preferred spraying method is the aerial spraying method in terms of productivity.

### EXAMPLES

Next, the present disclosure is described in more detail. However, the present disclosure is not limited to the following Examples as long as the modification is true to the gist of the disclosure.

"Part(s)" and "%" are by weight.

### [Example 1]

### <Preparation of PVA Resin (1)>

1,000 Parts of vinyl acetate, 9,580 parts of methanol, and 237 parts (2 mol% with respect to vinyl acetate loaded) of polyoxyethylene allyl ether having an average chain length of n=10 were loaded into a reaction vessel equipped with a reflux condenser, a drip funnel, and a stirrer. Azobisisobutyronitrile was added thereto at 0.079 mol% (with respect to vinyl acetate loaded), and a temperature in the vessel was raised with stirring in a nitrogen stream to start polymerization. Further, 1,410 parts of vinyl acetate, 3,195 parts of methanol, and 2,130 parts of polyoxyethylene allyl ether were added dropwise thereto over 13 hours, and 4 hours after the start of the polymerization, azobisisobutyronitrile was further added thereto at 0.079 mol% (with respect to vinyl acetate loaded) . At the time when the polymerization ratio of vinyl acetate reached 94%, a predetermined amount of m-dinitrobenzene was added to complete the polymerization. Subsequently, unreacted vinyl acetate monomers were removed from the system by distillation while methanol steam was blown thereinto. Thus, a solution of a copolymer in methanol was obtained. Next, the methanol solution was adjusted so as to contain the copolymer at a concentration of 40% and loaded into a kneader, and saponification was carried out for 1.5 hours by adding a solution of 2% sodium hydroxide in methanol at a ratio of 10 mmol with respect to 1 mol of a vinyl acetate structural unit in the copolymer while the temperature of the solution was maintained at 40°C. Acetic acid for neutralization was added thereto in an amount of 0.8 equivalents relative to sodium hydroxide, and then the mixture was heated with stirring to remove methanol completely. After that, water was added to dissolve the resultant. Thus, a 40% aqueous solution of an oxyalkylene group-containing PVA resin [PVA resin (1)] was obtained. The resultant PVA resin (1) was found to have a saponification degree, as determined by an analysis based on alkali consumption required for the hydrolysis of residual vinyl acetate, of 41 mol%, and an average degree of polymerization, as determined by an analysis in conformity with JIS K 6726, of 280. In addition, the PVA resin (1) had a modification ratio [oxyalkylene group content], determined based on the load amount of the monomers, of 1.7 mol%.

The PVA resin (1) obtained as above was dissolved in water so that an aqueous solution containing the PVA resin at a concentration of 5% was obtained. Further, a PVA resin solution was prepared by adding the anionic surfactant (B) (sodium dodecylbenzenesulfonate, manufactured by Kao Corporation, "NEOPELEX G-15") at a concentration of 5% with respect to the PVA resin (1). Then, a liquid fertilizer (manufactured by Sumitomo Chemical Garden Products Inc. , ORTHORAN wettable powder) was diluted to a predetermined concentration, and 5 parts of the diluted solution was added to 100 parts of such PVA resin solution. Thus, a liquid spray agent for plants was prepared.

### [Example 2]

### <Preparation of PVA Resin (2)>

400 Parts of vinyl acetate, 45 parts of methanol, and 55 parts (2 mol% with respect to vinyl acetate loaded) of polyoxyethylene allyl ether having an average chain length of n=15 were loaded into a reaction vessel equipped with a reflux condenser, a drip funnel, and a stirrer. Azobisisobutyronitrile was added thereto at 0.1 mol% (with respect to vinyl acetate loaded), and a temperature in the vessel was raised with stirring in a nitrogen stream to start polymerization. Further, 600 parts of vinyl acetate and 25 parts of methanol were added dropwise thereto over 12 hours, and 83 parts of polyoxyethylene allyl ether was added dropwise thereto over 11 hours. In addition, 11 hours after the start of the polymerization, azobisisobutyronitrile was further added thereto at 0.14 mol% (with respect to vinyl acetate loaded) . At the time when the polymerization ratio of vinyl acetate reached 92%, a predetermined amount of m-dinitrobenzene was added to complete the polymerization. Subsequently, unreacted vinyl acetate monomers were removed from the system by distillation while methanol steam was blown thereinto. Thus, a solution of a copolymer in methanol was obtained. Next, the methanol solution was adjusted so as to contain the copolymer at a concentration of 40% and loaded into a kneader, and saponification was carried out for 1.5 hours by adding a solution of 2% sodium hydroxide in methanol at a ratio of 10 mmol with respect to 1 mol of a vinyl acetate structural unit in the copolymer while the temperature of the solution was maintained at 40°C. Acetic acid for neutralization was added thereto in an amount of 0.8 equivalents relative to sodium hydroxide, and then the mixture was heated with stirring to remove methanol completely. After that, water was added to dissolve the resultant. Thus, a 35% aqueous solution of an oxyalkylene group-containing PVA resin [PVA resin (2)] was obtained. The resultant PVA resin (2) was found to have a saponification degree, as determined by an analysis based on alkali consumption required for the hydrolysis of residual vinyl acetate, of 43 mol%, and an average degree of polymerization, as determined by an analysis in conformity with JIS K 6726, of 400. In addition, the PVA resin (2) had a modification ratio [oxyalkylene group content], determined based on the load amount of the monomers, of 1.7 mol%.

A liquid spray agent for plants was prepared in the same manner as in Example 1 except that the PVA resin (2) obtained as above was used instead of the PVA resin (1).

### [Example 3]

### <Preparation of PVA Resin (3)>

1,000 Parts of vinyl acetate and 300 parts of methanol were loaded into a reaction vessel equipped with a reflux condenser, a drip funnel, and a stirrer. Azobisisobutyronitrile was added thereto at 0.079 mol% (with respect to vinyl acetate loaded), and a temperature in the vessel was raised with stirring in a nitrogen stream to start polymerization. Further, each of 2 hours and 4 hours after the start of the polymerization, azobisisobutyronitrile was further added thereto at 0.079 mol% (with respect to vinyl acetate loaded) . At the time when the polymerization ratio of vinyl acetate reached 94%, a predetermined amount of m-dinitrobenzene was added to complete the polymerization. Subsequently, unreacted vinyl acetate monomers were removed from the system by distillation while methanol steam was blown thereinto. Thus, a solution of a copolymer in methanol was obtained. Next, the methanol solution was adjusted so as to contain the copolymer at a concentration of 50% and loaded into a kneader, and saponification was carried out by adding a solution of 2% sodium hydroxide in methanol at a ratio of 10 mmol with respect to 1 mol of a vinyl acetate structural unit in the copolymer while the temperature of the solution was maintained at 40°C. At the time when a saponified product was deposited to form particles with progression of the saponification, acetic acid for neutralization was added thereto in an amount of 0.8 equivalents relative to sodium hydroxide, and the mixture was filtered. The residue was washed with methanol well and dried in a hot-air dryer. Thus, an unmodified PVA resin [PVA resin (3)] was obtained. The resultant PVA resin (3) was found to have a saponification degree, as determined by an analysis based on alkali consumption required for the hydrolysis of residual vinyl acetate, of 34 mol%, and an average degree of polymerization, as determined by an analysis in conformity with JIS K 6726, of 300.

A liquid spray agent for plants was prepared in the same manner as in Example 1 except that the PVA resin (3) obtained as above was used instead of the PVA resin (1).

### [Example 4]

### <Preparation of PVA Resin (4)>

3,800 Parts of vinyl acetate, 4,100 g of methanol, and 40 g of allylsulfonic acid were loaded into a reaction vessel equipped with a reflux condenser, a drip funnel, and a stirrer. Azobisisobutyronitrile was added thereto at 0.073 mol% (with respect to vinyl acetate loaded), and a temperature in the vessel was raised with stirring in a nitrogen stream to start polymerization. Further, 2 hours after the start of the polymerization, azobisisobutyronitrile was further added thereto at 0.055 mol%, and 4 hours after the start of the polymerization, azobisisobutyronitrile was further added thereto at 0.055 mol%. The polymerization was carried out over 8 hours, and at the time when the polymerization ratio of vinyl acetate reached 94%, a predetermined amount of m-dinitrobenzene was added to complete the polymerization. Subsequently, unreacted vinyl acetate monomers were removed from the system by distillation while methanol steam was blown thereinto. Thus, a solution of a copolymer in methanol was obtained. Next, the methanol solution was adjusted so as to contain the copolymer at a concentration of 55% and loaded into a kneader, and saponification was carried out for 1.5 hours by adding a solution of 2% sodium hydroxide in methanol at a ratio of 8 mmol with respect to 1 mol of a vinyl acetate structural unit in the copolymer while the temperature of the solution was maintained at 35°C. After the saponification, methanol was completely removed. Thus, an allylsulfonic acid group-containing PVA resin [PVA resin (4)] was obtained. The resultant PVA resin (4) was found to have a saponification degree, as determined by an analysis based on alkali consumption required for the hydrolysis of residual vinyl acetate, of 47 mol%, and an average degree of polymerization, as determined by an analysis in conformity with JIS K 6726, of 500. In addition, the PVA resin (4) had a modification ratio [allylsulfonic acid group content], determined based on the load amount of the monomers, of 0.6 mol%.

A liquid spray agent for plants was prepared in the same manner as in Example 1 except that the PVA resin (4) obtained as above was used instead of the PVA resin (1).

### [Example 5]

Vinyl acetate and 3-mercaptopropionic acid were copolymerized in methanol. Next, the copolymer thus obtained was saponified with sodium hydroxide. A PVA resin [PVA resin (5)] thus obtained was found to have a saponification degree, as determined by an analysis based on alkali consumption required for the hydrolysis of residual vinyl acetate, of 38 mol%, and an average degree of polymerization, as determined by an analysis in conformity with JIS K 6726, of 530. In addition, the PVA resin (5) had a modification ratio [terminal carboxyl group content], determined based on the load amount of the monomers, of 0.25 mol%. When the PVA resin (5) was purified by 48-hour Soxhlet extraction with methanol, and was then dissolved in heavy water and subjected to a nuclear magnetic resonance analysis (NMR), the PVA resin (5) was found to have a COONa group at an end of a molecule thereof, and hence it was confirmed that the resin had a carboxyl group represented by NaOOC-CH₂-CH₂-S- at the one end of the molecule.

A liquid spray agent for plants was prepared in the same manner as in Example 1 except that the PVA resin (5) obtained as above was used instead of the PVA resin (1).

### [Comparative Example 1]

The PVA resin (1) obtained as above was dissolved in water so that an aqueous solution containing the PVA resin at a concentration of 5% was obtained. Further, a PVA resin aqueous solution was prepared by adding polyoxyethylene lauryl ether (manufactured by Kao Corporation, "EMULGEN 103") serving as a nonionic surfactant at a concentration of 5% with respect to the PVA resin (1). Then, a liquid fertilizer (manufactured by Sumitomo Chemical Garden Products Inc., ORTHORAN wettable powder) was diluted to a predetermined concentration, and 5 parts of the diluted solution was added to 100 parts of such PVA resin aqueous solution. Thus, a liquid spray agent for plants was prepared.

### [Comparative Example 2]

The PVA resin (3) obtained as above was dissolved in water so that an aqueous solution containing the PVA resin at a concentration of 5% was obtained. Then, a liquid fertilizer (manufactured by Sumitomo Chemical Garden Products Inc., ORTHORAN wettable powder) was diluted to a predetermined concentration, and 5 parts of the diluted solution was added to 100 parts of such PVA resin aqueous solution. Thus, a liquid spray agent for plants was prepared.

### [Comparative Example 3]

The PVA resin (1) obtained as above was dissolved in water so that an aqueous solution containing the PVA resin at a concentration of 5% was obtained. Then, a liquid fertilizer (manufactured by Sumitomo Chemical Garden Products Inc., ORTHORAN wettable powder) was diluted to a predetermined concentration, and 5 parts of the diluted solution was added to 100 parts of such PVA resin aqueous solution. Thus, a liquid spray agent for plants was prepared.

### [Comparative Example 4]

The PVA resin (3) obtained as above was dissolved in water so that an aqueous solution containing the PVA resin at a concentration of 5% was obtained. Further, a PVA resin aqueous solution was prepared by adding polyoxyethylene lauryl ether (manufactured by Kao Corporation, "EMULGEN 103") serving as a nonionic surfactant at a concentration of 5% with respect to the PVA resin (3). Then, a liquid fertilizer (manufactured by Sumitomo Chemical Garden Products Inc., ORTHORAN wettable powder) was diluted to a predetermined concentration, and 5 parts of the diluted solution was added to 100 parts of such PVA resin aqueous solution. Thus, a liquid spray agent for plants was prepared.

The liquid spray agents for plants obtained as above in Examples and Comparative Examples were each evaluated for their spreading property according to the following criteria. The results are collectively shown in Table 1 below.

### <<Evaluation of Spreading Property>>

A liquid spray agent for plants was sprayed on the leaf surfaces of a plant (Benjamin) using a spray. The plant was left to stand for 24 hours, and then water was sprayed on the leaf surfaces (the surfaces on which the liquid spray agent for plants was sprayed) of the plant using a spray. Then, the remaining spread surfaces were visually observed, and a case in which the spread surfaces remained at a ratio of 80% or more with respect to the area of the leaf surfaces (the surfaces on which the liquid spray agent for plants was sprayed) was indicated by Symbol "o". A case in which the spread surfaces remained at a ratio of 30% or more and less than 80% with respect to the area of the leaf surfaces (the surfaces on which the liquid spray agent for plants was sprayed) was indicated by Symbol "Δ", and a case in which the spread surfaces remained at a ratio of less than 30% with respect to the area of the leaf surfaces was indicated by Symbol "×".

### <<Evaluation of Dispersion Stability>>

A liquid spray agent for plants was prepared, and was then left to stand still for 4 days at room temperature. Then, the appearance of the liquid spray agent for plants after the still standing was visually observed, and a case in which its PVA resin and the like were judged to be dispersed because no precipitate was observed was indicated by Symbol "○", a case in which a precipitate was produced when the agent was observed after a lapse of 3 days from the start of the still standing was indicated by Symbol "Δ", and a case in which a precipitate was produced when the agent was observed after a lapse of 1 day from the start of the still standing was indicated by Symbol "×".

**Table 1**

| | PVA resin | | | Surfactant | Evaluation | |
|---|---|---|---|---|---|---|
| | Type of modification | Saponification degree (mol%) | Average degree of polymerization | | Spreading property | Dispersion stability |
| Example 1 | Oxyalkylene | 41 | 280 | Anionic | ○ | ○ |
| Example 2 | Oxyalkylene | 43 | 400 | Anionic | ○ | ○ |
| Example 3 | Unmodified | 34 | 300 | Anionic | ○ | Δ |
| Example 4 | Sulfonic acid | 47 | 500 | Anionic | ○ | ○ |
| Example 5 | Terminal carboxy lic acid | 38 | 530 | Anionic | ○ | ○ |
| Comparative Example 1 | Oxyalkylene | 41 | 280 | Nonionic | ○ | × |
| Comparative Example 2 | Unmodified | 34 | 300 | - | ○ | × |
| Comparative Example 3 | Oxyalkylene | 41 | 280 | - | ○ | × |
| Comparative Example 4 | Unmodified | 34 | 300 | Nonionic | ○ | × |

In each of Examples 1 to 5 in which the liquid spray agent for plants of the present disclosure was used, both the dispersion stability and the spreading property were excellent. Meanwhile, in each of Comparative Examples 1 and 4 in which the nonionic surfactant was used, and each of Comparative Examples 2 and 3 in which the PVA resin and an anionic surfactant were not used in combination, the spreading property was excellent but the dispersion stability was poor.

Specific modes in the present disclosure have been shown in Examples above, but such Examples are purely illustrative and are not to be interpreted as limiting the present disclosure . Various modifications apparent to a person skilled in the art are intended to fall within the scope of the present disclosure.

The liquid spray agent for plants of the present disclosure includes the specific PVA resin (A) and the anionic surfactant (B), and hence has a high spreading property and is excellent in sprayability. Accordingly, the agent is effectively applied as a liquid spray agent to be used in agricultural and horticultural fields, for example, a spray agent for leaf surfaces, stems, and fruits.

## Claims

1. A liquid spray agent for plants, comprising:
a polyvinyl alcohol resin (A) having a saponification degree of from 30 mol% to 60 mol%; and
an anionic surfactant (B).

2. The liquid spray agent for plants according to claim 1, wherein the polyvinyl alcohol resin (A) has an average degree of polymerization of from 100 to 2,000.

3. The liquid spray agent for plants according to claim 1 or 2, wherein the polyvinyl alcohol resin (A) comprises a polyvinyl alcohol resin having a hydrophilic modifying group.

4. The liquid spray agent for plants according to any one of claims 1 to 3, wherein a content of the anionic surfactant (B) is from 1 part by weight to 20 parts by weight with respect to 100 parts by weight of the polyvinyl alcohol resin (A).

5. The liquid spray agent for plants according to any one of claims 1 to 4, wherein the liquid spray agent for plants comprises a spray agent suitable for foliar application.

6. A method for applying a liquid spray agent for plants, comprising providing a liquid spray agent for plants including
a polyvinyl alcohol resin (A) having a saponification degree of from 30 mol% to 60 mol% and
an anionic surfactant (B), and
applying the liquid spray agent for plants by an aerial spraying method.
